# EUROPEAN PATENT APPLICATION

(11) **EP 0 841 092 A2**
(43) Date of publication of application: **13.05.1998**
(21) Application number: 97119722.3
(22) Date of filing: 11.11.1997
(51) Int. Cl.: B01J 29/06, C10G 35/095, C10G 11/05

(54) **Zeolite material and the use thereof in the conversion of non-aromatic hydrocarbons to aromatics and light olefins**

(30) Priority: 12.11.1996 US 745533
(71) Applicant: PHILLIPS PETROLEUM COMPANY, Bartlesville Oklahoma (US)
(72) Inventor: Drake, Charles A., Nowata, Ok 74048 (US); An-Hsiang Wu,, Bartlesville, Ok 74006 (US)
(74) Representative: Dost, Wolfgang, Dr.rer.nat., Dipl.-Chem.

(57) **Abstract**

A hydrocarbon conversion process in which the rate of coke formation is reduced and aromatics and light olefins yield is increased by the use of an improved zeolite catalyst that comprises a silylated, zeolite material preferably treated with steam. Another embodiment includes the use of an improved zeolite catalyst that comprises silylated, acid treated zeolite material.

## Description

### Background of the Invention

The invention relates to a process for converting non-aromatic hydrocarbons in the presence of an improved zeolite material to aromatic and lower olefin hydrocarbons. Also, the invention relates to the reduction in the rate of coke formation during the conversion of hydrocarbons in the presence of such improved zeolite material.

It is known to catalytically crack non-aromatic gasoline boiling range hydrocarbons to lower olefins (such as ethylene and propylene) and aromatic hydrocarbons (such as benzene, toluene, and xylenes) in the presence of catalysts which contain a zeolite (such as ZSM-5), as is described in an article by N.Y. Chen et al in Industrial & Engineering Chemistry Process Design and Development, Volume 25, 1986, pages 151-155. The reaction product of this catalytic cracking process contains a multitude of hydrocarbons such as unconverted C₅+ alkanes, lower alkanes (methane, ethane, propane), lower alkenes (ethylene and propylene), C₆-C₈ aromatic hydrocarbons (benzene, toluene, xylenes, and ethylbenzene), and C₉+ aromatic hydrocarbons. Depending upon the relative market prices of the individual reaction products, it can be desirable to increase the yield of certain of the more valuable products relative to the others.

One concern with the use of zeolite catalysts in the conversion of hydrocarbons to aromatic hydrocarbons and lower olefins is the excessive production of coke during the conversion reaction. Coke formed during the zeolite catalyzed aromatization of hydrocarbons tends to cause catalyst deactivation. It is desirable to improve the process for the aromatization of hydrocarbons by minimizing the amount of coke formed during such aromatization reaction processes.

### Summary of the Invention

It is an object of this invention to at least partially convert hydrocarbons to ethylene, propylene and BTX (benzene, toluene, xylene and ethylbenzene) aromatics.

A further object of this invention is to provide an improved process for the conversion of hydrocarbons in which the rate of coke formation during such conversion of hydrocarbons is minimized.

A yet further object of this invention is to provide an improved zeolite material which when used in the conversion of hydrocarbons results in less coke formation than alternative zeolite materials.

A still further object of this invention is to provide an improved zeolite material that gives an improved yield of lower olefins relative to BTX aromatics when utilized in the conversion of hydrocarbons.

Another object of this invention is to provide hydrocarbon conversion processes which have an acceptably low coke production rate and/or which produces a conversion product containing a suitable ratio of lower olefins to BTX aromatics.

Another further object of this invention is to provide a method for making an improved zeolite material having such desirable properties as providing for lower coke production and favorable olefin to BTX product ratio when used in the conversion of hydrocarbons.

One of the inventive processes provides for the conversion of non-aromatic hydrocarbons to aromatic hydrocarbons and lower olefins by contacting a feed comprising at least one non-aromatic hydrocarbon containing 5 to 16 carbon atoms per molecule selected from a group consisting of alkanes, alkenes, cycloparaffins, and cycloalkenes with a silylated, acid-leached zeolite composition under effective contacting conditions such that the reaction product contains lower alkenes containing 2-5 carbon atoms per molecules and aromatic hydrocarbons.

Another of the inventive processes provides for the conversion of non-aromatic hydrocarbons to aromatic hydrocarbons and lower olefins by contacting a feed comprising at least a non-aromatic hydrocarbon containing 2 to 16 carbon atoms per molecule selected from a group consisting of alkanes, alkenes, cycloparaffins, and cycloalkenes with a silylated zeolite composition, that has preferably been steam-treated, under effective contacting conditions such that the reaction product contains lower alkenes containing 2-5 carbon atoms per molecule and aromatic hydrocarbons.

Another embodiment of the invention is a composition used in the conversion of hydrocarbons comprising an acid-leached zeolite material treated with a silylating agent and/or steam. This novel zeolite composition is made by leaching a zeolite material with acid to form an acid leached zeolite material and silylating the acid leached zeolite material with a silylating agent. The silylated, acid leached zeolite is effective in increasing the ratio of olefin to aromatics and reducing the rate of coke formation during use in converting hydrocarbons to aromatics and olefins.

Another inventive composition used in the conversion of hydrocarbons comprises a zeolite material treated with a silylating agent with the silylated zeolite material preferably being treated with steam. This novel zeolite composition is made by silylating a zeolite material with a silylating agent to form a silylated zeolite material. The silylated zeolite material can be treated with steam to thereby form a steam treated, silylated zeolite material. The steam treated, silylated zeolite material provides for a high yield of olefins and aromatics with a low rate of coke formation when used in converting gasoline to aromatics and olefins.

Other objects and advantages of the invention will become apparent from the detailed description and the appended claims.

### Detailed Description of the Invention

It is has been unexpectedly found that the inventive composition comprising an acid leached zeolite treated with a silylating agent, when used in the conversion of hydrocarbons, particularly in the aromatization of a gasoline product from a catalytic oil cracking unit, provides for a significant improvement in the weight ratio of olefins to BTX aromatics with a very low rate of coke formation. The inventive silylated, acid leached zeolite composition utilizes a zeolite starting material which is treated, or preferably leached with an acid compound. This acid treated, or leached, zeolite material is then treated with a silylating agent to thereby incorporate silicon into the acid treated zeolite and provide a silylated, acid treated zeolite composition that is effective in providing an improvement in the weight ratio of olefins to aromatics with a low rate of coke formation during its use in converting gasoline to olefins and aromatics.

Any suitable means can be used to treat the zeolite starting material with acid. It is preferred for the zeolite to be soaked with an acid solution by any suitable means known in the art for contacting the zeolite with such acid solution. The acid solution used to treat the zeolite can be a solution of any acid that suitably provides for the leaching of aluminum atoms from the zeolite crystalline structure. Examples of such suitable acids include sulfuric, phosphoric, nitric and hydrochloric. The preferred acid solution is aqueous hydrochloric acid. The zeolite is soaked in the acid solution for a period of from about 0.25 hours to about 10 hours. After soaking, the resultant acid treated zeolite is washed free of the acid and then can be dried or calcined, or both.

The acid treated zeolite is then silylated by treatment with a silylating agent. The silylating agent can be any suitable silicon containing compound that effectively treats the acid leached zeolite so as to provide a silylated, acid leached zeolite that is effective in giving an improved weight ratio of olefins to aromatics with a low rate of coke formation when used in converting gasoline to aromatics and olefins. More particularly, the silylating agent is an organosilicon compound selected from compounds having the following molecular formulas:

SiR_{y}X_{4-y} and (R_{w}X_{3-w}Si)₂-Z

wherein:
y = 1 to 4;
w = 1 to 3;
R = alkyl, aryl, H, alkoxy, arylalkyl, and where R has from 1 to 10 carbon atoms;
X = halide; and
Z = oxygen or imino or alkylimino or alkanoylimino.

The preferred silylating agent is selected from the group of tetra alkyl orthosilicates, Si(OR)₄, and poly(alkyl)siloxane. The most preferred silylating agents are tetra ethyl orthosilicate and poly(phenyl methyl)siloxane.

The preferred method of silylating the acid treated zeolite is to impregnate it with a solution of the silylating agent by any standard incipient wetness technique known in the art. The solution may be an aqueous solution or a hydrocarbon solution of the silylating agent. It is preferred, however, for the silylating agent to be insoluble in water but soluble in hydrocarbon. Any suitable hydrocarbon solvent can be used including, for example, aromatics and other hydrocarbons having from 4 to 10 carbon atoms per molecule including alkanes, cycloalkanes and olefins. The most preferred hydrocarbon solvent is cyclohexane. The concentration of silylating agent in the solution can range upwardly to the solubility limit of the silylating agent in the solvent. Preferably, the concentration of the silylating agent in the solution can be in the range from about 1 weight percent to about 99 weight percent. Most preferred, the concentration of silylating agent in the solvent is from 5 to 25 weight percent.

The amount of silylating agent incorporated into the acid treated zeolite should be such as to provide a silylated, acid leached zeolite that effectively provides a suitably high weight ratio of olefin to aromatics with a low rate of coke formation during its use in the conversion of gasoline to aromatics and olefins. Generally, the silylating agent can be present in the acid leached zeolite in an amount upwardly to about 50 weight percent of the acid leached zeolite. Preferably, the amount of silylating agent incorporated into the acid leached zeolite can be in the range of from about 0.5 weight percent to about 40 weight percent and, most preferably, from 5 weight percent to 25 weight percent.

After the incorporation of silylating agent into the acid leached zeolite, the thus impregnated acid leached zeolite can be dried at suitable drying conditions, generally in the presence of air, and then calcined. The drying temperature generally ranges from about 20°C to about 125°C and is generally preformed over a time period of from 0.1 hours to 4 hours. The calcination temperature is generally in the range of from about 300°C to about 700°C. The calcination can be performed in an air atmosphere for a time period of from 0.1 hours to 10 hours.

Another of the inventive compositions includes a zeolite material treated with a silylating agent to give a silylated zeolite material. Preferably, the silylated zeolite material is further treated with steam to give a steam treated, silylated zeolite. The silylated zeolite material and steam treated, silylated zeolite material are particularly useful in the aromatization of hydrocarbons to provide a high yield of BTX aromatics with a low rate of coke production.

To prepare the silylated zeolite material, a zeolite starting material is silylated by treatment with a silylating agent. The silylating agent can be any suitable silicon containing compound that is effective in providing a high BTX yield, preferably an improved BTX yield over other zeolite catalysts, and a low rate of coke formation when used in converting gasoline to aromatics and olefins. The more desirable silylating agents includes organosilicon compounds as described earlier herein among which tetra alkyl orthosilicates and poly(alkyl) siloxane are preferred. The most preferred silylating agents are tetra ethyl orthosilicate and poly(phenyl methyl) siloxane.

The preferred method of silylating the zeolite starting material is with a solution of the silylating agent by any standard incipient wetness technique known in the art. Suitable silylating solutions are as described earlier herein. It is preferred to impregnate the zeolite starting material with a sufficient amount of silylating agent that effectively provides for an improved BTX yield when the silylated zeolite is utilized in the conversion of gasoline to aromatics and olefins. To achieve this benefit, generally, the silylating agent can be present in the zeolite starting material in an amount upwardly to about 50 weight percent of the zeolite starting material. Preferably, the amount of silylating agent incorporated in the zeolite starting material can be in the range of from about 0.5 weight percent to about 40 weight percent and, most preferably, from 5 weight percent to 25 weight percent.

After the incorporation of silylating agent into the zeolite starting material, the silylated zeolite can be dried at suitable drying conditions, generally in the presence of air, and then calcined. The drying temperatures generally range from about 20°C to about 125°C and is generally performed over a time period of from 0.1 hours to 4 hours. The calcination temperature is generally in the range of from about 300°C to about 700°C. The calcination can be performed in an air atmosphere for a time period of from 0.1 hours to 10 hours.

The silylated zeolite material can preferably be steam treated to give a steam treated, silylated zeolite composition. The silylated zeolite material can be steam treated by any suitable method known in the art. Generally, the silylated zeolite material is exposed to an atmosphere of steam for a period of time sufficient to provide a steam treated, silylated zeolite composition that is useful in the aromatization of hydrocarbons and provides for an improved yield of BTX aromatics with a low rate of coke production. The steam temperature can generally be in the range of from about 100°C to about 900°C under a pressure in the range of from subatmospheric to about 3000 psia. Preferably, the steam is not a saturated steam but is superheated steam in the temperature range of from about 125°C to about 750°C and, most preferably, from 150°C to 700°C. The silylated zeolite is exposed to the steam atmosphere for a period sufficient to provide the desired properties but, generally, upwardly to about 20 hours. Preferably, the silylated zeolite is treated with steam for a period of from about 0.5 hours to about 15 hours and, most preferably from 1 hour to 10 hours.

The zeolite starting material used in the composition of the invention can be any zeolite which is effective in the conversion of non-aromatics to aromatics when contacted under suitable reaction conditions with non-aromatic hydrocarbons. Preferably, the zeolite has a constraint index (as defined in U.S. Patent 4,097,367, which is incorporated herein by reference) in the range of about 0.4 to about 12, preferably about 2-9. Generally, the molar ratio of SiO₂ to Al₂O₃ in the crystalline framework of the zeolite is at least about 5:1 and can range up to infinity. Preferably the molar ratio of SiO₂ to Al₂O₃ in the zeolite framework is about 8:1 to about 200:1, more preferably about 12:1 to about 60:1. Preferred zeolites include ZSM-5, ZSM-8, ZSM-11, ZSM-12, ZSM-35, ZSM-38, and mixtures thereof. Some of these zeolites are also known as 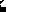 MFI 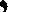 or 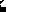 Pentasil 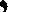 zeolites. The presently more preferred zeolite is ZSM-5.

The inventive compositions described herein can also contain an inorganic binder (also called matrix material) preferably selected from the group consisting of alumina, silica, alumina-silica, aluminum phosphate, clays (such as bentonite), and mixtures thereof. Optionally, other metal oxides, such as magnesia, ceria, thoria, titania, zirconia, hafnia, zinc oxide and mixtures thereof, which enhance the thermal stability of the catalyst composition, may also be present in the catalyst composition.

The content of the zeolite component of the zeolite compositions is about 1-99 (preferably about 5-80) weight-%, and the content of the above-listed inorganic binder and metal oxide materials in the zeolite is about 1-50 weight-%. Generally, the zeolite component of the zeolite compositions has been compounded with binders and subsequently shaped (such as by pelletizing, extruding or tableting). Generally, the surface area of the compounded zeolite composition is about 50-700 m²/g, and its particle size is about 1-10 mm.

Any suitable hydrocarbon feedstock which comprises paraffins (alkanes) and/or olefins (alkenes) and/or naphthenes (cycloalkanes), wherein each of these hydrocarbons contains 2-16 carbon atoms per molecule can be used as the feed to be contacted with the inventive zeolite compositions under suitable process conditions for obtaining a reaction product comprising lower alkenes containing 2-5 carbon atoms per molecule and aromatic hydrocarbons. Frequently, these feedstocks also contain aromatic hydrocarbons. Non-limiting examples of suitable, available feedstocks include gasolines from catalytic oil cracking (e.g., FCC and hydrocracking) processes, pyrolysis gasolines from thermal hydrocarbon (e.g., ethane, propane, and naphtha) cracking processes, naphthas, gas oils, reformates, straight-run gasoline and the like. The preferred feed is a gasoline-boiling range hydrocarbon feedstock suitable for use as at least a gasoline blend stock generally having a boiling range of about 30-210°C. Generally, the content of paraffins exceeds the combined content of olefins, naphthenes and aromatics (if present).

The hydrocarbon feed stream can be contacted by any suitable manner with the inventive zeolite compositions described herein contained within a reaction zone. The contacting step can be operated as a batch process step or, preferably, as a continuous process step. In the latter operation, a solid catalyst bed or a moving catalyst bed or a fluidized catalyst bed can be employed. Any of these operational modes have advantages and disadvantages, and those skilled in the art can select the one most suitable for a particular feed and catalyst. No significant amount of hydrogen gas is required to be introduced with the feed into the reaction zone of the contacting step, i.e., no H₂ gas at all or only insignificant trace amounts of H₂ (e.g., less than about 1 ppm H₂) which do not significantly affect the processes are to be introduced into these reactors from an external source.

The contacting step is preferably carried out within an aromatization reaction zone, wherein is contained the novel zeolite composition, and under reaction conditions that suitably promote the aromatization of at least a portion of the hydrocarbons of the hydrocarbon feed. The reaction temperature of the contacting step is more particularly in the range of from about 400°C to about 800°C, preferably, from about 450°C to about 750°C and, most preferably, from 500°C to 700°C. The contacting pressure can range from subatmospheric pressure upwardly to about 500 psia, preferably, from about atmospheric to about to about 450 psia and, most preferably, from 20 psia to 400 psia.

The flow rate at which the hydrocarbon feed is charged to the aromatization reaction zone is such as to provide a weight hourly space velocity ( 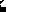 WHSV 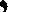 ) in the range of from exceeding 0 hour⁻¹ upwardly to about 1000 hour⁻¹. The term 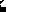 weight hourly space velocity 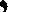 , as used herein, shall mean the numerical ratio of the rate at which a hydrocarbon feed is charged to a reaction zone in pounds per hour divided by the pounds of catalyst contained in the reaction zone to which the hydrocarbon is charged. The preferred WHSV of the feed to the contacting zone can be in the range of from about 0.25 hour⁻¹ to about 250 hour⁻¹ and, most preferably, from 0.5 hour⁻¹ to 100 hour⁻¹.

The following examples are presented to further illustrate this invention and are not to be construed as unduly limiting its scope.

### Example I

This example illustrates the preparation of several catalysts which were subsequently tested as catalysts in the conversion of a gasoline sample, which had been produced in a commercial fluidized catalytic cracking unit (FCC), to aromatics.

Catalyst A was a commercial HZSM-5-containing catalyst extrudate which was supplied by Chemie Uetikon AG, Uetikon, Switzerland, under the product designation "Zeocat® PZ-2/50 H". This catalyst contained 97.0 weight-% SiO₂, 2.9 weight-% Al₂O₃ and 0.1 weight-% Na₂O, all determined on an anhydrous basis; having a SiO₂:Al₂O₃ mole ratio of about 50:1, a BET surface area of about 400 m²/g. The extrudate had an approximate diameter of 1/16 inch and length of 3/16 inch. Catalyst A was calcined in air at 538°C for 2 to 4 hours before it was used in the aromatization tests described in Example II.

Catalyst B was prepared by impregnating (by incipient wetness) 15.0 grams of Catalyst A with 7.9 grams of a 20 weight-% solution of tetraethyl orthosilicate (also known as tetraethoxysilane; TEOS) in cyclohexane; drying the TEOS-impregnated Catalyst A material at room temperature for about 3 hours; heating the dried material in air so as to increase its temperature from room temperature to a final temperature of 538°C at a rate of 1°C/minute; calcining the material for 6 hours in air at 538°C; cooling the calcined material to room temperature; impregnating the cooled, calcined material with 8.0 grams of a 25 weight-% solution of TEOS in cyclohexane; drying/calcining the twice-impregnated material, as described above; cooling, impregnating the calcined, twice-impregnated material with 8.0 grams of a 25 weight-% solution of TEOS in cyclohexane; and finally drying/heating the thrice-impregnated material, as described above. Catalyst B weighed 16.34 grams, and thus had gained 1.34 grams in weight (as SiO₂).

Catalyst C was prepared by treating 10.89 grams of Catalyst B with 100% steam for 3 hours at 325°C, followed by cooling the steamed material in a helium gas stream (flow rate: 100 cc/minute).

### Example II

This example illustrates the use of the zeolite materials described in Example I as catalysts in the conversion of a gasoline feed to benzene, toluene and xylenes (BTX) and lower olefins (ethylene, propylene).

A sample of 5.0 g of each of the catalyst materials described in Example I was placed into a stainless steel tube reactor (length: about 18 inches; inner diameter: about 0.5 inch). Gasoline (density: 0.73 g/cc; containing about 4.2 weight-% C₄-C₁₃ normal paraffins, about 25.4 weight-% C₄-C₁₃ isoparaffins, about 25.4 weight-% C₄-C₉ olefins, about 9.5 weight-% C₅-C₁₂ naphthenes and about 32.7 weight-% C₆-C₁₂ aromatics) from a catalytic cracking unit of a refinery was passed through the reactor at a flow rate of about 10.0 g/hour, at a temperature of about 600°C and at atmospheric pressure (about 0 psig). Thus, the weight hourly space velocity (WHSV) of the liquid feed was about 2.0 g feed/g catalyst/hour. The formed reaction product exited the reactor tube and passed through several ice-cooled traps. The liquid portion remained in these traps and was weighed, whereas the volume of the gaseous portion which exited the traps was measured in a "wet test meter". Liquid and gaseous product samples (collected at hourly intervals) were analyzed by means of a gas chromatograph. Results of three test runs for Catalyst A, B and C are summarized in Table I. All test data were obtained after 8 hours on stream.

**TABLE I**

| ***Catalyst*** | ***Composition of Gas Product (Wt-%)*** | | | | ***Composition of Liquid Product (Wt-%)*** | | | ***Coke (wt-% hour)*** |
|---|---|---|---|---|---|---|---|---|
| | ***H***_{***2***} | ***C***_{***2***}***H***_{***4***} | ***C***_{***3***}***H***_{***6***} | ***Others***^{***1***} | ***BTX***^{***2***} | ***Heavies***^{***3***} | ***Other***^{***4***} | |
| A zeolite | 28.0 | 15.0 | 20.6 | 36.4 | 39.8 | 32.6 | 37.6 | 4.9 |
| B silylated zeolite | 25.3 | 20.2 | 24.0 | 30.5 | 60.8 | 28.7 | 10.5 | 0.3 |
| C steam treated, silylated zeolite | 29.4 | 18.7 | 20.8 | 31.1 | 64.8 | 26.6 | 8.6 | 0.6 |

| | | | | | | | | |
|---|---|---|---|---|---|---|---|---|
| ¹ Mainly methane, ethane, propane and C₅+ hydrocarbons; minor amounts of n-butane, isobutane and butenes. | | | | | | | | |
| ² Benzene, toluene and xylenes; minor amounts of ethylbenzene. | | | | | | | | |
| ³ Primarily aromatic hydrocarbons containing more than 8 C atoms per molecule. | | | | | | | | |
| ⁴ Primarily C₅-C₈ paraffins. | | | | | | | | |
| ⁵ Cumulative increase in weight (g) of catalyst divided by duration of test ( 8 hours). | | | | | | | | |

Test data in Table I clearly show that Catalysts B and C, which have been treated with tetraethyl orthosilicate, exhibited considerably less coking than control Catalyst A which had not been treated. Furthermore, higher yields of BTX aromatics were obtained when "silylated" Catalysts B and C were used. An additional increase in BTX yield was achieved by steam treatment after the treatment with tetraethyl orthosilicate (compare run using Catalyst C versus run using Catalyst B).

### Example III

This example describes the two preparations of zeolite used in the aromatization reaction runs of Example IV.

A commercially available ZSM-5 catalyst (provided by United Catalysts Inc., Louisville, KY, under product designation 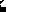 T-4480 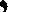 ) was treated by acid leaching. To acid leach the catalyst, it was soaked in an aqueous HCl solution, having a concentration of 19 weight percent HCl, for two hours at a constant temperature of about 90°C. After soaking, the catalyst was separated from the acid solution and thoroughly washed with water and dried. The acid soaked, washed and dried catalyst was calcined at a temperature of about 500°C for four hours. This acid leached ZSM-5 catalyst was used in the aromatization reaction runs as described hereafter to determine the coking rate related to its use.

The acid leached ZSM-5 zeolite described above was treated with a silylating agent by using an incipient wetness technique to impregnate it with a 50 weight percent solution of poly(methyl phenyl) siloxane with cyclohexane as the solvent. The impregnated, acid leached ZSM-5 was dried for two hours followed by calcination at 530°C for six hours. This silylated and calcined acid leached ZSM-5 catalyst was used in an aromatization reaction run as described hereafter to determine the product yield and coking rate related to its use.

### Example IV

This example illustrates the benefit of reduced coke formation rate and improved olefin-to-BTX product ratio that result from the inventive use of the inventive silylated, acid leached zeolite in the conversion of hydrocarbons to olefins. The standard T-4480 zeolite and the two zeolite preparations described in Example III were used in three reaction runs the results of which are summarized in Table II. Table II provides comparisons of the results from the use of the standard zeolite and acid leached zeolite with the results from the use of the inventive silylated, acid leached zeolite.

For each of the reaction test runs, a sample of 5 g of the particular zeolite catalyst preparation mixed with about 5 cc 10-20 mesh alumina was placed into a stainless steel tube reactor (length: about 18 inches; inner diameter; about 0.5 inch). Gasoline from a catalytic cracking unit of a refinery was passed through the reactor at a flow rate of about 14 ml/hour, at a temperature of about 600°C and at atmospheric pressure (about 0 psig). The formed reaction product exited the reactor tube and passed through several ice-cooled traps. The liquid portion remained in these traps and was weighed, whereas the volume of the gaseous portion which exited the traps was measured in a 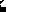 wet test meter 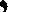 . Liquid and gaseous product samples were periodically collected and analyzed by means of a gas chromatograph. After the reaction runs were completed (approximately 8 hours on stream) the coking rate was determined by measuring the amount of coke deposited on the surface of the catalyst. The coking rate and product olefin-to-BTX ratio results of the three test runs for the catalysts described in Example III are summarized in Table II.

**Table II**

| ***Catalyst*** | ***Olefin to BTX Weight Ratio*** | ***Coke Rate Wt%/hr*** |
|---|---|---|
| T-4480 Zeolite | 0.45 | 4.36 |
| Acid Leached Zeolite | 0.31 | 1.74 |
| Silylated, Acid Leached Zeolite | 0.88 | 0.46 |

As can be seen from the coking rate data presented in Table II, the use of a silylated, acid leached zeolite in the conversion of hydrocarbons resulted in a significantly lower coking rate than that of the zeolite or acid leached zeolite. Also, a significant improvement in the olefin-to-BTX ratio in the reaction product is achieved by using the silylated, acid leached zeolite.

Reasonable variations, modifications, and adaptations can be made within the scope of the disclosure and the appended claims without departing from the scope of this invention.

## Claims

1. A method of making a zeolite catalyst effective in increasing the ratio of olefins to aromatics and in reducing formation of coke during use of said zeolite catalyst in converting gasoline to said aromatics and said olefins, comprising the step of silylating a zeolite material with a silylating agent to thereby form a silylated zeolite material.

2. The method of claim 1 wherein the silylating agent is incorporated into said zeolite material in an amount of upwardly to 50 weight percents, preferably in an amount of from 0.5 to 40 weight percent.

3. The method of claim 1 or 2, wherein said silylating agent is an organosilicon compound.

4. The method of any of claims 1 to 3, wherein said silylating agent is selected from tetra alkyl orthosilicate and poly(phenyl methyl)siloxane.

5. The method of any of the preceding claims, further including calcining said silylated zeolite material at a temperature in the range of from 100 to 1000° C for a period of from 0.1 hour to 20 hours.

6. The method of any of the preceding claims, further comprising steaming said silylated zeolite material.

7. The method of claim 6, wherein said steam treating step includes contacting said silylated zeolite material with steam at a temperature in the range of from 100 to 600° C for a period of from 0.1 hour to 20 hours.

8. The method of claim 6 or 7, wherein said steam treated, silylated zeolite composition is calcined at a temperature in the range of from 100 to 1000° C for a period of 0.1 hour to 20 hours.

9. The method of any of the preceding claims, wherein a zeolite which has been leached with acid, is used as said zeolite material.

10. The method of claim 9, further comprising drying and calcining said silylated zeolite material.

11. A composition effective in providing a high yield of olefins and aromatics with a low rate of coke formation during use of said composition in converting gasoline to said aromatics and said olefins, said composition comprising a zeolite material treated with a silylating agent.

12. The composition of claim 11, wherein said silylated zeolite material is treated with steam.

13. A composition effective in increasing the ratio of olefins to aromatics and reducing the rate of coke formation during use of said composition in converting gasoline to said aromatics and said olefins, according to claim 11 or 12, wherein said zeolite material is an acid leached zeolite.

14. The composition of any of claims 11 to 13, wherein the composition is obtainable by a method as defined in any of claims 1 to 10.

15. Use of a composition of any of claims 11 to 14 in the conversion of non-aromatic hydrocarbons to aromatic hydrocarbons and lower olefin hydrocarbons.

16. Use according to claim 15, wherein a feed comprising at least one non-aromatic hydrocarbon containing 2-16 carbon atoms per molecule selected from alkanes, alkenes, and cycloparaffins, is contacted with said composition, under contacting conditions effective in obtaining a reaction product comprising lower alkenes containing 2-5 carbon atoms per molecule and aromatic hydrocarbons.
